# EUROPÄISCHE PATENTSCHRIFT

(11) **EP 1 367 314 B1**
(45) Veröffentlichungstag und Bekanntmachung des Hinweises auf die Patenterteilung: **21.03.2007**
(21) Anmeldenummer: 03010957.3
(22) Anmeldetag: 16.05.2003
(51) Int. Cl.: F16P 3/14

(54) **Vorrichtung zur Überwachung eines Erfassungsbereiches an einem Arbeitsmittel**
Device for monitoring the operating range of working means
Dispositif de surveillance du champ d'action d'un organe de travail

(30) Priorität: 31.05.2002 DE 10224031
(43) Veröffentlichungstag der Anmeldung: 03.12.2003
(73) Patentinhaber: Leuze lumiflex GmbH + Co. KG, 82256 Fürstenfeldbruck (DE)
(72) Erfinder: Lohmann, Lutz, Dr., 82140 Olching (DE)
(74) Vertreter: Ruckh, Rainer Gerhard

(56) Entgegenhaltungen:
- DE-A- 10 049 366
- US-A- 4 965 840
- US-A1- 2001 041 077

## Beschreibung

Die Erfindung betrifft eine Vorrichtung zur Überwachung eines Erfassungsbereiches an einem Arbeitsmittel.

Das Arbeitsmittel kann beispielsweise von einem Montageroboter gebildet sein, welcher zum Montieren von Werkstücken dient. Derartige Montageroboter stellen ein hohes Gefahrenpotential für die jeweilige Bedienperson dar, da diese die Werkstücke üblicherweise manuell am Montageroboter einführen muss.

Zur Absicherung derartiger Erfassungsbereiche werden üblicherweise Schutzeinrichtungen eingesetzt, die bei einem unkontrollierten Eingriff der Bedienperson in einen derartigen Erfassungsbereich das Arbeitsmittel außer Betrieb setzen.

Derartige Schutzeinrichtungen können insbesondere als Zweihandschaltungen ausgebildet sein. Diese Zweihandschaltungen schützen die Hände der Bedienperson dadurch, dass zum Auslösen und Aufrechterhalten einer gefahrbringenden Bewegung zwei Hebel aktiv betätigt werden müssen. Dadurch muss die Bedienperson beide Hände an den Hebeln halten und ist so bei der Bedienung eines Arbeitsmittels vor Verletzungen geschützt. Nachteilig hierbei ist jedoch, dass weitere Personen im Erfassungsbereich ungeschützt sind.

Für den Fall, dass das Arbeitsmittel als Montageroboter ausgebildet ist, ist zudem nachteilig, dass sich der Arbeitstakt des Montageroboters verringert, wodurch dessen Verfügbarkeit unnötig eingeschränkt wird.

Weiterhin werden als Schutzeinrichtungen Sicherheits-Lichtvorhänge und/oder Laserscanner eingesetzt. Ein derartiger Sicherheits-Lichtvorhang ist beispielsweise aus der DE 39 39 191 C3 bekannt. Diese Sicherheits-Lichtvorhänge bestehen aus mehreren Paaren von Sendern und Empfängern, welche jeweils eine Lichtschranke bilden. Laserscanner dienen in der Regel als Hintertretschutz hinter einer Lichtschranke oder einem Lichtgitter.

Mit derartigen Sicherheitseinrichtungen wird ein ebener, zweidimensionaler Überwachungsbereich abgedeckt.

Nachteilig bei derartigen Sicherheitseinrichtungen ist, dass zu einer kompletten Absicherung des Erfassungsbereiches an einem Montageroboter, insbesondere hinsichtlich des Zugriffsschutzes und der Bereichssicherung eine Vielzahl von Sicherheitseinrichtungen benötigt wird. Dies stellt nicht nur einen unerwünscht hohen Kostenaufwand dar, sondern erfordert auch eine aufwendige Montage, wobei oftmals nur unzureichend Platz für deren Anbringung zur Verfügung steht.

Die EP 0 902 402 A2 betrifft ein Verfahren zur optischen Überwachung eines Raumbereiches, insbesondere des Türbereiches eines Aufzuges. Der Raumbereich wird mittels einer Kamera überwacht. Alternativ können mehrere Kameras vorgesehen sein, mittels derer jeweils unterschiedliche Segmente des Raumbereiches überwacht werden. Die oder jede Kamera ist als digitale Kamera ausgebildet und weist ein Kameramodul, einen A/D Wandler, eine Auswerteeinheit, einen Mikroprozessor und einen Bildspeicher auf. Zur Überwachung des Raumbereiches erfolgt in der Auswerteeinheit ein pixelweiser Vergleich von Grauwerten eines aktuellen Bildes mit Grauwerten eines Referenzbildes. Dabei werden die Differenzen zwischen den Grauwerten des aktuellen Bildes und den Grauwerten des Referenzbildes gebildet. Zudem überwacht der Mikroprozessor die Funktionsfähigkeit der Kamera dadurch, dass das Unterund/oder Überschreiten einer Grundhelligkeit des aktuellen Bildes festgestellt wird.

Aus der DE 101 20 773 A1 ist eine Anordnung mit einer Videokamera und einer Einrichtung bekannt, die zur Vermeidung von Unfällen eingesetzt werden. Die Videokamera dient zur Überwachung eines Raumbereiches. Alternativ können mehrere Videokameras vorgesehen sein, mittels derer jeweils unterschiedliche Raumbereiche überwacht werden. An die oder jede Kamera ist das Bildverarbeitungssystem angeschlossen. Hinter dem Bildverarbeitungssystem befindet sich ein Analog-Digital Wandler, dessen Ausgang mit zwei Bildverarbeitungskanälen verbunden ist. Beide Kanäle sind mit einem Datenvergleicher verbunden.

Aus der US 2001/041077 A1 ist eine Vorrichtung zur Überwachung eines Erfassungsbereiches an einem Arbeitsmittel mit den Merkmalen des Oberbegriffs des Anspruchs 1 bekannt.

Der Erfindung liegt die Aufgabe zugrunde, ein System zu schaffen, welches eine sichere Überwachung eines Erfassungsbereiches an einem Arbeitsmittel gewährleistet ohne dessen Verfügbarkeit unnötig einzuschränken.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung weist wenigstens ein redundantes Kamerasystem bestehend aus zwei Kameras sowie einen diesen vorgeordneten Strahlteiler auf. Über den Strahlteiler sind Bilder des Erfassungsbereiches auf beide Kameras zur Erfassung von sicherheitskritischen Objekten innerhalb wenigstens einer Schutzzone abbildbar. Die Vorrichtung weist weiterhin zwei Rechnereinheiten auf, wobei jeweils eine Rechnereinheit an eine der Kameras zur Auswertung der dort erfassten Bildinformationen angeschlossen ist. Beide Rechnereinheiten sind zur gegenseitigen Überprüfung miteinander gekoppelt. Des Weiteren weist die Vorrichtung einen von den Rechnereinheiten angesteuerten Schaltausgang auf. Über den Schaltausgang ist das Arbeitsmittel nur dann in Betrieb gesetzt, falls sich kein sicherheitskritisches Objekt innerhalb der Schutzzone befindet.

Die beiden Kameras bilden ein redundantes Kamerasystem, durch welches eine hohe Detektionssicherheit bei der Objekterfassung erzielt wird. Die Detektionssicherheit wird durch die den Kameras nachgeordnete zweikanalige Rechnerstruktur weiter gewährleistet.

Dabei erfolgt die erfindungsgemäße Bildverarbeitung derart, dass durch den Strahlteiler jeweils dasselbe Bild von dem Erfassungsbereich auf die Kameras abgebildet wird. Zur Objekterfassung werden die Bildinformationen, die von einer Kamera generiert werden, jeweils in einer dieser nachgeordneten Rechnereinheit ausgewertet. Zudem erfolgt ein Vergleich der Auswerteergebnisse beider Rechnereinheiten, wobei dieser Vergleich vorzugsweise auf einer Bildmerkmalsebene erfolgt.

Die erfindungsgemäße Vorrichtung bildet vorzugsweise ein System mit diversitärer Redundanz. Die vorzugsweise identisch oder wenigstens funktionsgleich ausgebildeten Kameras sowie die nachgeordneten Rechnereinheiten bilden ein redundantes Optik- und Hardwaresystem, während die Software auf den Rechnereinheiten diversitär ausgebildet ist. Dies bedeutet, dass auf den Rechnereinheiten unterschiedliche Softwarestrukturen vorhanden sind, die durch Installation unterschiedlicher Softwaremodule oder durch unterschiedliche Programmabläufe auf den Rechnereinheiten realisierbar sind.

Mit der erfindungsgemäßen Vorrichtung wird somit eine hohe Sicherheit bei der Auswertung der Bilderfassung erzielt, so dass die Vorrichtung den sicherheitstechnischen Anforderungen zum Einsatz im Bereich des Personenschutzes genügt.

Mit der erfindungsgemäßen Vorrichtung kann durch eine geeignete Wahl des vom Kamerasystem erfassten Erfassungsbereiches sowohl ein Zugriffsschutz als auch eine Bereichssicherung im Bereich des Arbeitsmittels realisiert werden. Das Arbeitsmittel ist vorteilhaft von einem Arbeitsroboter, insbesondere einem Montageroboter gebildet. Generell kann das Arbeitsmittel von einer Druckmaschine, einer Zuführeinrichtung, einer Presse, insbesondere einer Abkantpresse oder dergleichen gebildet sein.

Ein weiterer Vorteil der Erfindung besteht darin, dass innerhalb des von dem Kamerasystem erfassten Erfassungsbereiches sicherheitskritische Objekte, wie zum Beispiel Hände oder Finger einer Person, von nicht sicherheitskritischen Objekten unterschieden werden können. Diese Unterscheidung erfolgt zweckmäßigerweise durch die in den Rechnereinheiten durchgeführte Bildmerkmalsanalyse.

Prinzipiell kann zur Beurteilung, ob sich ein sicherheitskritisches Objekt in der Schutzzone befindet, auch zusätzlich ein Vergleich der aktuellen Bildinformationen mit vorgegebenen Referenzbildern durchgeführt werden.

Eine Außerbetriebsetzung des Arbeitsmittels über die erfindungsgemäße Vorrichtung erfolgt nur dann, wenn ein sicherheitskritisches Objekt in eine Schutzzone innerhalb des Erfassungsbereiches eindringt.

Im einfachsten Fall erstreckt sich die Schutzzone über den gesamten von der Vorrichtung erfassten Erfassungsbereich. Besonders vorteilhaft wird durch Eingabe von Parametern in die Auswerteeinheit oder durch einen Einlernvorgang die Schutzzone als definierter Teilausschnitt des Erfassungsbereiches dimensioniert. Weiterhin können Schutzzonengrenzen durch Einzeichnen in Aufnahmebildern, die vom Kamerasystem generiert werden, erzeugt werden. Die Schutzzone kann so auf die jeweils zu erfassenden Gefahrenstellen genau zugeschnitten werden. Dadurch wird eine Überwachung in nicht sicherheitskritischen Raumbereichen vermieden, wodurch die Verfügbarkeit der erfindungsgemäßen Schutzeinrichtung beträchtlich erhöht wird ohne dass das Sicherheitsniveau bei der Überwachung verringert wird.

In einer vorteilhaften Ausführungsform der Erfindung kann der Schutzzone wenigstens eine Warnzone zugeordnet sein, wobei die Warnzone vorzugsweise unmittelbar an die Schutzzone anschließt. Bei Eindringen eines sicherheitskritischen Objekts in die Warnzone erfolgt die Abgabe eines Warnsignals, welches eine Vorwarnmeldung bildet, die die Bedienperson oder Dritte vor Eindringen eines sicherheitskritischen Objekts in die Schutzzone warnt. Dadurch kann die Bedienperson geeignete Maßnahmen ergreifen, um ein Eindringen des sicherheitskritischen Objekts in die Schutzzone und damit ein Außerbetriebsetzen des Arbeitsmittels zu verhindern. Dadurch lassen sich unnötige Standzeiten des Arbeitsmittels verhindern.

In einer vorteilhaften Weiterbildung der Erfindung können entsprechend den Anforderungen der jeweiligen Applikation innerhalb eines Erfassungsbereiches auch mehrere Schutzzonen und Warnzonen vorgesehen sein, wobei eine Außerbetriebsetzung des Arbeitsmittels dann erfolgt, wenn in wenigstens einer Schutzzone ein sicherheitskritisches Objekt erfasst wird. Entsprechend erfolgt eine Warnsignalabgabe, wenn in wenigstens einer Warnzone ein sicherheitskritisches Objekt erfasst wird.

Die Erfindung wird im Nachstehenden anhand der Zeichnungen erläutert. Es zeigen:
- Figur 1:: Ein als Montageroboter ausgebildetes Arbeitsmittel mit einer Vorrichtung zur Überwachung eines Erfassungsbereiches im Zugangsbereich zum Montageroboter.
- Figur 2:: Blockschaltbild der erfindungsgemäßen Vorrichtung gemäß Figur 1.
- Figur 3:: Ein als Druckmaschine ausgebildetes Arbeitsmittel mit einer Vorrichtung zur Überwachung eines sich über den Bereich des Anlegers und Auslegers der Druckmaschine erstreckenden Erfassungsbereiches.
- Figur 4:: Druckmaschine gemäß Figur 3 mit zwei Vorrichtungen zur Überwachung des Bereiches des Auslegers und des Anlegers.
- Figur 5:: Von einer Vorrichtung überwachter Bereich des Papiereinzugs am Anleger der Druckmaschine gemäß Figur 3 oder 4.
- Figur 6:: Seitenansicht eines von einer Abkantpresse gebildeten Arbeitsmittels mit einer vor diesem angeordneten Vorrichtung zur Überwachung eines Erfassungsbereiches.
- Figur 7:: Querschnitt durch einen Ausschnitt der Anordnung gemäß Figur 1 mit jeweils einer innerhalb eines Erfassungsbereiches liegenden Schutzzone und Warnzone.

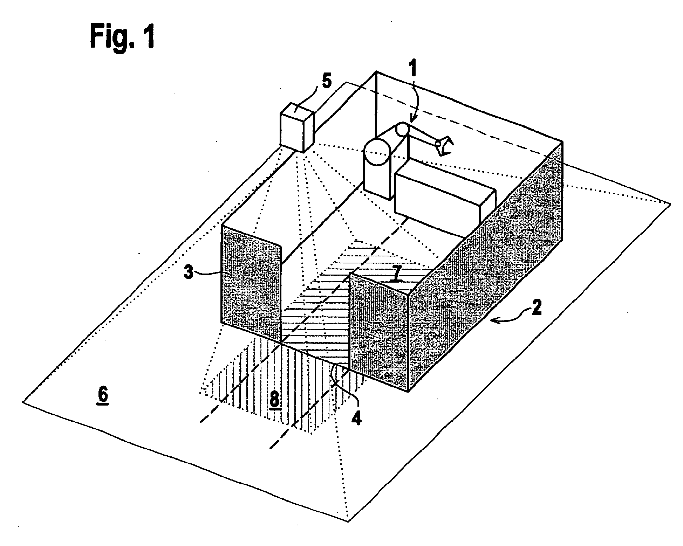

Figur 1 zeigt ein Ausführungsbeispiel einer Schutzeinrichtung, die zur Überwachung des Vorfelds eines als Arbeitsroboter ausgebildeten Arbeitsmittels dient. Im vorliegenden Ausführungsbeispiel ist der Arbeitsroboter von einem Montageroboter 1 gebildet.

Der Montageroboter 1 befindet sich in einer eingezäunten Fertigungszelle 2 mit einer Einzäunung 3, die eine Zugangsöffnung 4 aufweist. Über die Zugangsöffnung 4 werden Gegenstände in die Fertigungszelle 2 eingebracht und aus dieser abtransportiert. Zudem hat das Bedienpersonal über diese Zugangsöffnung 4 Zugang zu der Fertigungszelle 2. Die Schutzeinrichtung ist von der erfindungsgemäßen Vorrichtung 5 gebildet, mittels derer ein Erfassungsbereich 6 erfasst wird. Der Erfassungsbereich 6 ist im vorliegenden Fall von dem Bereich der Fertigungszelle 2 sowie dessen Vorfeld gebildet.

Die Vorrichtung 5 ist in einem Gehäuse integriert, welches formschlüssig auf einer nicht dargestellten mechanischen Halterung so aufsitzt, dass diese schräg oberhalb des Montageroboters 1 angeordnet ist. Zur Ausrichtung der Vorrichtung 5 ist die mechanische Halterung in allen drei Raumrichtungen justierbar.

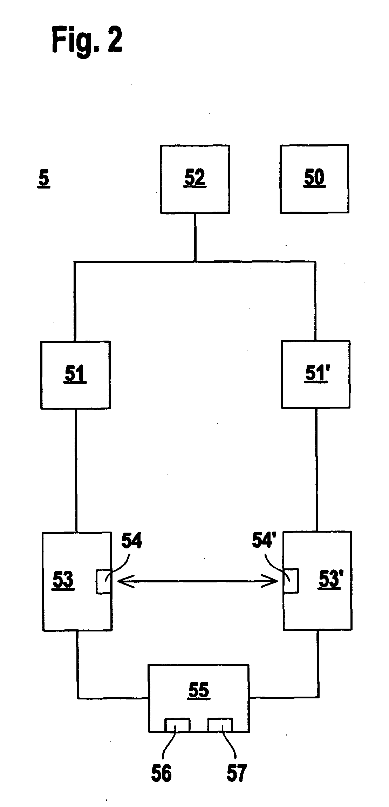

Figur 2 zeigt schematisch den Aufbau der erfindungsgemäßen Vorrichtung 5. Die Vorrichtung 5 weist ein Beleuchtungssystem 50 zur Ausleuchtung des zu überwachenden Erfassungsbereiches 6 auf. Weiterhin weist die Vorrichtung 5 ein redundantes Kamerasystem auf. Das Kamerasystem weist zwei Kameras 51, 51' auf, welchen ein Strahlteiler 52 vorgeordnet ist. Die Kameras 51, 51' sind im vorliegenden Fall identisch ausgebildet und sind beispielsweise von CMOS- oder CCD-Kameras gebildet. Prinzipiell sind auch unterschiedliche Kameras einsetzbar, die jedoch wenigstens funktionsgleich hinsichtlich ihrer optischen Parameter wie der Auflösung und der Größe der lichtempfindlichen Fläche sind. Der Strahlteiler 52 ist von einem Strahlteiler-Objektiv oder dergleichen gebildet. Mittels des Strahlteilers 52 wird jeweils dasselbe Bild vom Erfassungsbereich 6 auf die lichtempfindlichen Flächen der Kameras 51, 51' abgebildet.

An jede Kamera 51 oder 51' ist jeweils eine Rechnereinheit 53 oder 53' angeschlossen. Die beiden Rechnereinheiten 53, 53' bilden eine zweikanalige Auswerteeinheit zur Auswertung der in den Kameras 51, 51' generierten Bildinformationen. Die Rechnereinheiten 53, 53' sind zudem miteinander gekoppelt, wobei hierfür jede Rechnereinheit 53, 53' eine entsprechende Schnittstelle 54, 54' aufweist. Über die Schnittstellen 54, 54' erfolgt ein bidirektionaler Datenaustausch zwischen den Rechnereinheiten 53, 53'.

Die Ausgänge der Rechnereinheiten 53, 53' sind auf eine Ausgangsschaltung 55 geführt. Im vorliegenden Fall weist die Ausgangsschaltung 55 einen Schaltausgang 56 und einen Warnausgang 57 auf. Der Schaltausgang 56 und vorzugsweise auch der Warnausgang 57 sind jeweils als selbstüberwachender Sicherheitsausgang gebildet.

Die erfindungsgemäße Vorrichtung 5 bildet ein System mit diversitärer Redundanz. Die Kameras 51, 51' sowie die Hardwarestrukturen der Rechnereinheiten 53, 53' sind redundant ausgebildet. Die Software der Rechnereinheiten 53, 53' ist diversitär ausgebildet. Dies wird dadurch erreicht, dass die Softwarestrukturen der Rechnereinheiten 53, 53' unterschiedlich ausgebildet sind. Dies kann einerseits dadurch erreicht werden, dass auf den Rechnereinheiten 53, 53' unterschiedliche Softwaremodule installiert sind. Andererseits kann die diversitäre Softwarestruktur durch unterschiedliche Programmabläufe in den Rechnereinheiten 53, 53' erreicht werden.

Zur Objekterfassung werden die Bildinformationen der Kameras 51, 51' in die jeweils angeschlossene Rechnereinheit 53 oder 53' eingelesen. Dort werden die analogen Bildinformationen zunächst digitalisiert und dann ausgewertet.

Je nach dem ob die Kameras 51, 51' von Grauwert-Kameras oder Farbkameras gebildet sind, erfolgt die Auswertung in Form einer Grauwertanalyse oder einer Farbmerkmalsanalyse. Generell werden aus den Bildinformationen Bildmerkmale gewonnen, anhand derer ein Objekt erfassbar und klassifizierbar ist. Der Datenaustausch zwischen den Rechnereinheiten 53, 53' zu deren gegenseitigen Funktionskontrolle erfolgt auf der Ebene dieser Bildmerkmale.

In den Rechnereinheiten 53, 53' erfolgt durch die Bewertung der Bildmerkmale eine Objekterfassung. Insbesondere erfolgt dabei eine Unterscheidung von sicherheitskritischen und nicht sicherheitskritischen Objekten. Zu den sicherheitskritischen Objekten zählen die Bedienpersonen, vorzugsweise die Arme einer Bedienperson. Nicht sicherheitskritische Objekte bilden beispielsweise statische Objekte im Umfeld des Montageroboters 1, insbesondere auch die von diesem zu bearbeitenden Teile.

Ein sicherheitskritisches Objekt gilt dabei als erkannt, wenn in beiden Rechnereinheiten 53, 53' übereinstimmend die einem sicherheitskritischen Objekt entsprechenden Bildmerkmale erfasst werden.

Führt der Vergleich der Bildmerkmale, die in den Rechnereinheiten 53, 53' ermittelt werden, nicht zu einem übereinstimmenden Ergebnis wird aus Sicherheitsgründen das Arbeitsmittel ebenfalls außer Betrieb gesetzt, da in diesem Fall nicht auszuschließen ist, dass sich ein sicherheitskritisches Objekt in der Schutzzone 7 befindet.

Erfindungsgemäß wird in den Rechnereinheiten 53, 53' abgeprüft, ob sich ein sicherheitskritisches Objekt in einer Schutzzone 7 innerhalb des Erfassungsbereiches 6 befindet. Ist dies der Fall, so wird über die Vorrichtung 5 zum Schutz der Bedienperson das Arbeitsmittel außer Betrieb gesetzt. Befindet sich dagegen kein sicherheitskritisches Objekt in der Schutzzone 7, so wird der Betrieb des Arbeitsmittels über die Vorrichtung 5 freigegeben.

Die Ansteuerung des Arbeitsmittels erfolgt mittels eines binären Schaltsignals, welches über den Schaltausgang 56 an das Arbeitsmittel ausgegeben wird. Der Schaltausgang 56 kann alternativ über ein Sicherheits-Bussystem an das Arbeitsmittel angeschlossen sein.

Die Schaltzustände des Schaltsignals werden durch die Rechnereinheiten 53, 53' vorgegeben, wobei der aktuelle Schaltzustand angibt ob sich ein sicherheitskritischen Objekt in der Schutzzone 7 des Erfassungsbereiches 6 befindet oder nicht.

Im einfachsten Fall kann die Schutzzone 7 deckungsgleich mit dem von der Vorrichtung 5 überwachten Erfassungsbereich 6 sein.

Zweckmäßigerweise ist die Schutzzone 7 auf die Bereiche innerhalb des Erfassungsbereiches 6 begrenzt, innerhalb derer eine Gefährdung für die Bedienpersonen zu befürchten ist. Bei dem in Figur 1 dargestellten Fall stellt die Schutzzone 7 einen dreidimensionalen Teilbereich des Erfassungsbereiches 6 dar, der innerhalb der Einzäunung 3 liegt. Somit wird mit der Schutzzone 7 unmittelbar der gefahrbringende Schwenkbereich des Montageroboters 1 erfasst.

Zusätzlich zur Schutzzone 7 ist bei dem in Figur 1 dargestellten Ausführungsbeispiel eine Warnzone 8 vorgesehen. Die Warnzone 8 liegt im Vorfeld der Schutzzone 7 und grenzt unmittelbar an die Außenseite der Einzäunung 3 im Bereich der Zugangsöffnung 4 an.

Der Warnzone 8 ist in der Vorrichtung 5 der Warnausgang 57 zugeordnet, welcher einen nicht dargestellten Warnmelder steuert. In der Vorrichtung 5 wird erfasst, ob sich ein sicherheitskritisches Objekt in der Warnzone 8 befindet oder nicht. In Abhängigkeit davon wird ein binäres Signal generiert, wobei der jeweilige Schaltzustand des Signals über den Warnausgang 57 ausgegeben wird. Wird ein sicherheitskritisches Objekt in der Warnzone 8 registriert, so wird über den dadurch generierten Schaltzustand der Warnmelder aktiviert, so dass dieser ein akustisches und/oder optisches Warnsignal abgibt.

Dadurch wird der Bedienperson signalisiert, dass sich ein sicherheitskritisches Objekt in der Warnzone 8 und damit in unmittelbarer Nähe zur Schutzzone 7 befindet. Insbesondere wird der Bedienperson signalisiert, dass deren Arme in der Nähe der Schutzzone 7 sind, so dass die Bedienperson die drohende Gefahr einer Verletzung durch Entfernen ihrer Hände aus der Warnzone 8 beseitigen kann, ohne dass ein Eingriff in die Schutzzone 7 erfolgt, der zu einem unerwünschten Abschalten des Montageroboters 1 führen würde.

In einer vorteilhaften Weiterbildung der Erfindung wird die Bewegungsrichtung eines sicherheitskritischen Objektes innerhalb der Warnzone 8 erfasst.

Eine Aktivierung des Warnmelders 60 erfolgt in diesem Fall zweckmäßigerweise nur dann, wenn sich ein sicherheitskritisches Objekt innerhalb der Warnzone 8 auf die Schutzzone 7 zu bewegt.

Prinzipiell kann ein von der Vorrichtung 5 erfasster Erfassungsbereich 6 jeweils in mehrere Schutzzonen 7 und Warnzonen 8 unterteilt sein. Dann ist jeweils einer Schutzzone 7 ein separater Schaltausgang 56 und jeder Warnzone 8 ein separater Warnausgang 57 zugeordnet.

Eine Außerbetriebsetzung des Arbeitsmittels über die Vorrichtung 5 erfolgt dann, wenn in wenigstens einer Schutzzone 7 wenigstens ein sicherheitskritisches Objekt registriert wird.

Je nach Anwendungsfall kann für jede Warnzone 8 ein separater Wammelder vorgesehen sein. Alternativ kann ein Warnmelder mehreren Warnausgängen zugeordnet sein.

Die Schaltzustände der Schaltausgänge 56 und der Warnausgänge 57 können dabei in geeigneter Weise visualisiert sein, wobei hierfür geeignete Anzeigemittel vorgesehen sind.

Bei dem Ausführungsbeispiel gemäß Figur 1 kann beispielsweise die Visualisierung nach Art einer Verkehrsampel erfolgen. Zeigt eine derartige Ampel rotes Licht an, so befindet sich ein sicherheitskritisches Objekt in der Schutzzone 7. Eine gelbe Signalanzeige entspricht einem sicherheitskritischen Objekt in der Warnzone 8 bei freier Schutzzone 7. Eine grüne Signalanzeige zeigt an, dass sich weder in der Schutzzone 7 noch in der Warnzone 8 ein sicherheitskritisches Objekt befindet.

Die Dimensionierung der Schutzzone 7 und/oder Warnzone 8 kann beispielsweise durch eine Eingabe von Parametern in die Vorrichtung 5 erfolgen.

Beispielsweise kann die Vorrichtung 5 zur Inbetriebnahme und Konfigurierung der Schutzeinrichtung an einen Rechner, beispielsweise einen PC, angeschlossen werden. Die Eingabe der Parameter der Schutzzonen 7 und/oder Warnzonen 8 kann dann graphisch mit der Maus des PCs auf dem jeweiligen Aufnahmebild erfolgen.

Alternativ können die Schutzzonen 7 und/oder Warnzonen 8 durch einen Einlemvorgang vor der Inbetriebnahme der Vorrichtung 5 dimensioniert werden.

Des Weiteren können bei den genannten Konfigurierungsmöglichkeiten auch Bereiche innerhalb des Erfassungsbereiches 6 definiert werden, die bei der Überwachung durch Ausblendung ausgenommen sind. Dabei können diese Bereiche insbesondere mit den Schutzzonen 7 überlappen. In der nachfolgenden Betriebsphase der Vorrichtung 5 werden diese Bereiche vorzugsweise zu vorgegebenen Zeiten aktiviert. Während dieser Zeiten erfolgt dann bei Eindringen eines sicherheitskritischen Objekts in einen derartigen Bereich weder ein Außerbetriebsetzen des Arbeitsmittels noch die Abgabe eines Warnsignals.

Die Definition derartiger Bereiche ist insbesondere dann sinnvoll, wenn beispielsweise bei einem Arbeitsmittel in vorgegebenen Zeitintervallen gefahrbringende Werkzeuge außer Betrieb gesetzt werden, so dass in deren Umgebung für diese Zeitintervalle keine Gefährdung des Bedienpersonals zu befürchten ist. Die Definition der Schutzzonen 7 und Warnzonen 8 während der Konfigurierung erfolgt zweckmäßigerweise applikationsspezifisch.

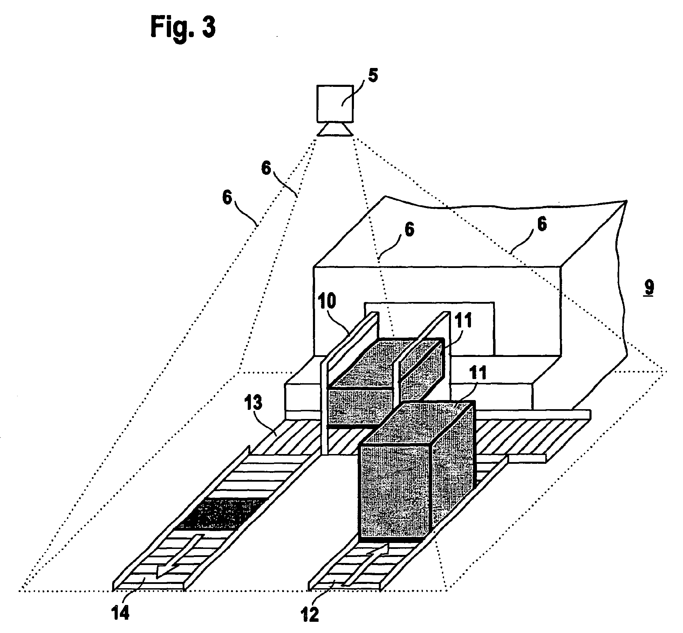

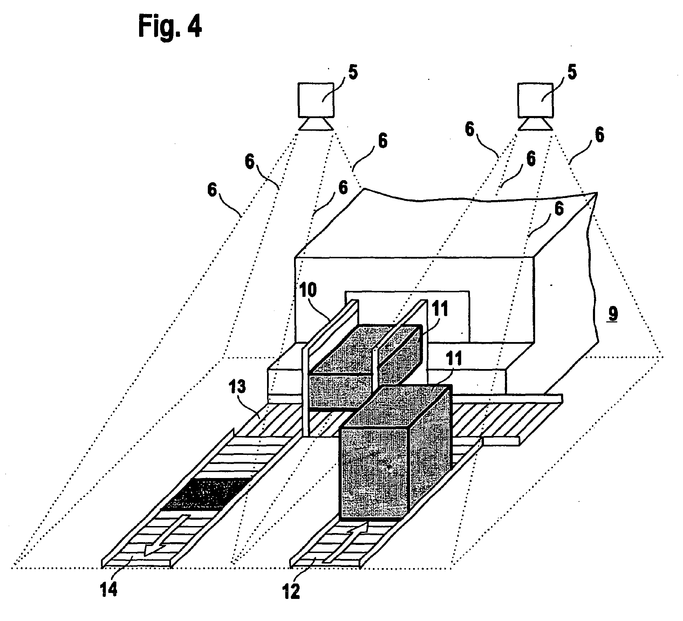

Die Figuren 3 und 4 zeigen Ausführungsbeispiele, bei welchen das von der erfindungsgemäßen Schutzeinrichtung überwachte Arbeitsmittel von einer Druckmaschine 9 gebildet ist.

Figur 3 zeigt eine Druckmaschine 9 mit einem Anleger 10 und einem Ausleger. Der Anleger 10 bildet den Einzugsbereich, in dem Papierbögen von Papierstapeln 11 abgezogen werden und in die Druckvorrichtung der Druckmaschine 9 eingezogen werden. Die einzelnen Papierstapel 11 werden dabei auf Paletten über einen ersten Kettenförderer 12 dem Anleger 10 zugeführt. Im Bereich des Anlegers 10 werden die Papierstapel 11 auf einer Rollenbahn 13 transportiert. Nach der Bedruckung der Papierbögen werden diese in Papierstapeln 11, die auf Paletten gestapelt sind, im Auslegerbereich über einen zweiten Kettenförderer 14 von der Druckmaschine 9 abtransportiert. In den Bereichen der Kettenförderer 12, 14 und des Anlegers 10 besteht durch die Fahrbewegungen der Paletten mit den Papierstapeln 11 eine Gefahr von Verletzungen für das Bedienpersonal.

Bei bekannten Druckmaschinen 9 erfolgt die Absicherung dieser Erfassungsbereiche 6 durch eine Umzäunung, die den Zugriff des Bedienpersonals komplett verhindert. Dadurch wird jedoch die Übersichtlichkeit und Zugänglichkeit der Druckmaschine 9 unnötig stark eingeschränkt. Insbesondere ist es nicht oder nur erschwert möglich, nicht sicherheitskritische Objekte im Erfassungsbereich 6 zu positionieren.

Bei dem in Figur 3 dargestellten Ausführungsbeispiel ist die Vorrichtung 5 mit dem Kamerasystem oberhalb der Druckmaschine 9 so montiert, dass der von dieser erfasste Erfassungsbereich 6 die Bereiche des Anlegers 10 und der Kettenförderer 12, 14 umfasst.

Die Durchführung der Überwachung mittels der Vorrichtung 5 erfolgt analog zu dem Ausführungsbeispiel gemäß Figur 1. Insbesondere wird der Erfassungsbereich 6 wieder in geeigneter Weise in Schutzzonen 7 und gegebenenfalls in Warnzonen 8 unterteilt, innerhalb derer sicherheitskritische Objekte erfassbar sind.

Figur 4 zeigt ein zweites Ausführungsbeispiel einer Schutzeinrichtung an einer Druckmaschine 9. Die Druckmaschine 9 entspricht dabei der Druckmaschine 9 gemäß Figur 4. Im Unterschied zur Schutzeinrichtung gemäß Figur 3 sind im vorliegenden Fall zwei Vorrichtungen 5 zur Überwachung von Erfassungsbereichen 6 vorgesehen. Der von der ersten Vorrichtung 5 erfasste Erfassungsbereich 6 umfasst den ersten Kettenförderer 12 für die Zufuhr von Papierstapeln 11 zur Druckmaschine 9.

Der von der zweiten Vorrichtung 5 erfasste Erfassungsbereich 6 umfasst den zweiten Kettenförderer 14 für den Abtransport von Papierstapeln 11 von der Druckmaschine 9.

Die von den Vorrichtungen 5 erfassten Erfassungsbereiche 6 sind dabei so dimensioniert, dass deren Breiten größer als die Breiten der Kettenförderer 12, 14 sind. Auf diese Weise können sicherheitskritische Objekte bereits erfasst werden, bevor diese in den Bereich der Kettenförderer 12, 14 eingedrungen sind. Zur Orientierung des Bedienpersonals können die Grenzen der Schutzzonen 7 innerhalb der Erfassungsbereiche 6 durch Linien auf dem Boden der Halle, in der die Druckmaschine 9 angeordnet ist, markiert sein.

Zweckmäßigerweise werden bei den Ausführungsbeispielen gemäß den Figuren 3 und 4 vor Inbetriebnahme der Schutzeinrichtung die auf den Paletten zu transportierenden Papierstapel 11 als nicht sicherheitskritische Objekte in der Auswerteeinheit 53 eingelernt und abgespeichert.

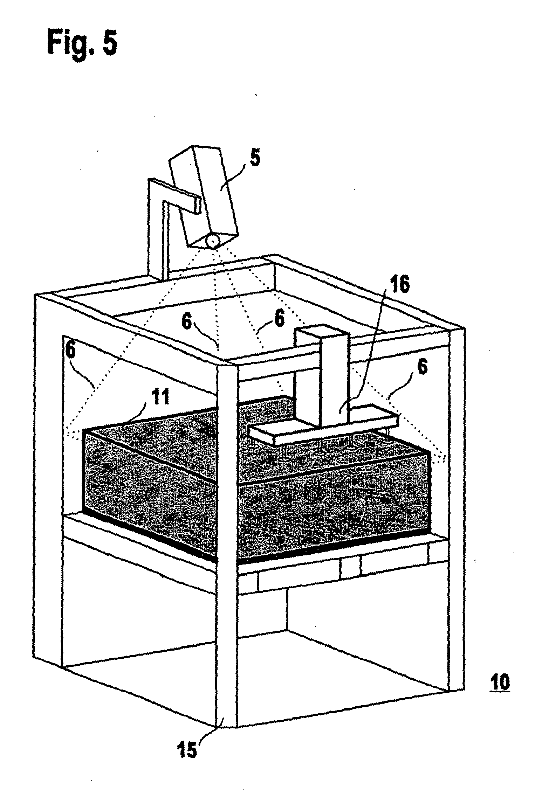

Figur 5 zeigt einen Anleger 10 einer Druckmaschine 9, welcher von einer einzelnen Vorrichtung 5 überwacht wird. Die Ausbildung der Druckmaschine 9 entspricht der Druckmaschine 9 gemäß den Figuren 3 und 4.

Der Anleger 10 besteht im Wesentlichen aus einem Rahmen 15, innerhalb dessen ein Papierstapel 11 angeordnet ist. Von der Oberseite des Papierstapels 11 wird mittels eines Greifers 16 der Papiereinzug von Papierbögen in die nicht dargestellte Druckvorrichtung der Druckmaschine 9 bewerkstelligt.

Die Vorrichtung 5 ist oberhalb des Anlegers 10 angebracht, so dass der von dem Kamerasystem der Vorrichtung 5 erfasste Erfassungsbereich 6 die Oberseite des Papierstapels 11 und den Greifer 16 umfasst. Die Schutzzone 7 innerhalb des Erfassungsbereiches 6 wird so dimensioniert, dass der Arbeitsbereich des Greifers 16, der für das Bedienpersonal gefahrbringende Bewegungen ausführt, vollständig erfasst wird.

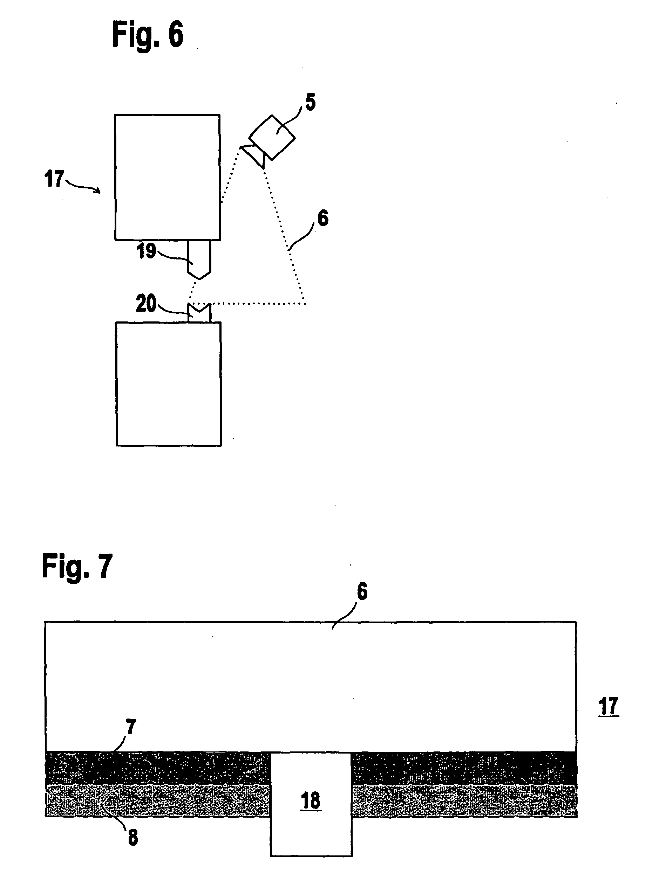

In den Figuren 6 und 7 ist ein Ausführungsbeispiel eines als Abkantpresse 17 ausgebildeten Arbeitsmittels dargestellt, welches zur Vermeidung von Gefährdungen einer Bedienperson überwacht werden muss.

Die Abkantpresse 17 dient zum Biegen und Formen von Werkstücken 18, insbesondere von Blechteilen. Die Formung eines Werkstücks 18 erfolgt jeweils mittels eines Oberwerkzeugs 19 und eines mit diesem zusammenwirkenden Unterwerkzeugs 20. Bei einer Pressbewegung werden das Ober- 19 und Unterwerkzeug 20 gegeneinander geführt, so dass ein dazwischenliegendes Werkstück 18 entlang einer Biegelinie abgekantet oder gebogen wird.

Zur Bearbeitung der Werkstücke 18 werden diese üblicherweise von Bedienpersonen in vorgegebenen Positionen zwischen Ober- 19 und Unterwerkzeug 20 eingebracht. Dadurch besteht für die jeweilige Bedienperson insbesondere die Gefahr von schwerwiegenden Verletzungen durch Einbringen der Hände oder Finger in den Bereich zwischen Ober- 19 und Unterwerkzeug 20. Des Weiteren birgt die Bewegung des Werkstücks 18 während des Pressvorgangs ein erhebliches Verletzungsrisiko der Bedienperson.

Zur Sicherung der Bedienperson ist wiederum die erfindungsgemäße Vorrichtung 5 vorgesehen, welche als berührungslose Schutzeinrichtung einen Erfassungsbereich 6 am Arbeitsmittel erfasst.

Wie aus den Figuren 6 und 7 ersichtlich ist, bildet der von der Vorrichtung 5 überwachte Erfassungsbereich 6 einen dreidimensionalen Raumbereich, dessen Grundfläche einen rechteckigen Querschnitt aufweist. Die Längsseite des Erfassungsbereiches 6 verläuft dabei entlang der Biegelinien der im Erfassungsbereich 6 liegenden Ober- 3 und Unterwerkzeuge 4.

Die Schutzzone 7 ist im vorliegenden Fall als Teilbereich des Erfassungsbereichs 6 ausgebildet, dessen längsseitige Grenze parallel zu den Biegelinien des Ober- 19 und Unterwerkzeuges 20 verläuft. Die Warnzone 8 liegt im Vorfeld des Ober- 19 und Unterwerkzeuges 20 und schließt unmittelbar an die Schutzzone 7 an.

### Bezugszeichenliste

- (1): Montageroboter
- (2): Fertigungszelle
- (3): Einzäunung
- (4): Zugangsöffnung
- (5): Vorrichtung
- (6): Erfassungsbereich
- (7): Schutzzone
- (8): Warnzone
- (9): Druckmaschine
- (10): Anleger
- (11): Papierstapel
- (12): Kettenförderer
- (13): Rollenbahn
- (14): Kettenförderer
- (15): Rahmen
- (16): Greifer
- (17): Abkantpresse
- (18): Werkstück
- (19): Oberwerkzeug
- (20): Unterwerkzeug

- (50): Beleuchtungssystem
- (51): Kamera
- (51'): Kamera
- (52): Strahlteiler
- (53): Rechnereinheit
- (53'): Rechnereinheit
- (54): Schnittstelle
- (54'): Schnittstelle
- (55): Ausgangsschaltung
- (56): Schaltausgang
- (57): Warnausgang

## Patentansprüche

1. Vorrichtung (5) zur Überwachung eines Erfassungsbereiches (6) an einem Arbeitsmittel mit wenigstens einem redundanten Kamerasystem bestehend aus zwei Kameras (51, 51') zur Erfassung von sicherheitskritischen Objekten innerhalb wenigstens einer Schutzzone (7), und mit zwei Rechnereinheiten (53, 53'), wobei jeweils eine Rechnereinheit (53 oder 53') an eine der Kameras (51 oder 51') zur Auswertung der dort erfassten Bildinformationen angeschlossen ist, und mit wenigstens einem von den Rechnereinheiten (53, 53') angesteuerten Schaltausgang (56), über welchen das Arbeitsmittel nur dann in Betrieb gesetzt ist, falls sich kein sicherheitskritisches Objekt innerhalb der Schutzzone (7) befindet, **dadurch gekennzeichnet, daß** die Vorrichtung aus einem den Kameras vorgeordneten Strahlteiler (52), über welchen Bilder des Erfassungsbereiches (6) auf beide Kameras (51, 51') abbildbar sind besteht und daß beide Rechnereinheiten (53, 53') zur gegenseitigen Überprüfung miteinander gekoppelt sind.

2. Vorrichtung nach Anspruch 1, **dadurch gekennzeichnet, dass** die Kameras (51, 51') des Kamerasystems identisch oder wenigstens funktionsgleich sind.

3. Vorrichtung nach einem der Ansprüche 1 oder 2, **dadurch gekennzeichnet, dass** die Rechnereinheiten (53, 53') eine identische Hardwarestruktur aufweisen.

4. Vorrichtung nach einem der Ansprüche 1 - 3, **dadurch gekennzeichnet, dass** die Rechnereinheiten (53, 53') unterschiedliche Softwarestrukturen aufweisen.

5. Vorrichtung nach Anspruch 4, **dadurch gekennzeichnet, dass** auf den Rechnereinheiten (53, 53') unterschiedliche Softwaremodule installiert sind.

6. Vorrichtung nach einem der Ansprüche 1-5, **dadurch gekennzeichnet, dass** in den Rechnereinheiten (53, 53') zur Objekterfassung aus den von den zugeordneten Kameras (51, 51') eingelesenen Bildinformationen Bildmerkmale gewonnen werden.

7. Vorrichtung nach Anspruch 6, **dadurch gekennzeichnet, dass** über die Kopplung zwischen den Rechnereinheiten (53, 53') ein Vergleich von in den beiden Rechnereinheiten (53, 53') ermittelten Bildmerkmalen erfolgt.

8. Vorrichtung nach Anspruch 7, **dadurch gekennzeichnet, dass** über den Schaltausgang (56) das Arbeitsmittel außer Betrieb gesetzt ist, falls die in den einzelnen Rechnereinheiten (53, 53') ermittelten Bildmerkmale nicht übereinstimmen.

9. Vorrichtung nach Anspruch 8, **dadurch gekennzeichnet, dass** über den Schaltausgang (56) das Arbeitsmittel außer Betrieb gesetzt ist, falls in beiden Rechnereinheiten (53, 53') übereinstimmend Bildmerkmale ermittelt werden, die einem in der Schutzzone (7) befindlichen sicherheitskritischen Objekt zugeordnet sind.

10. Vorrichtung nach einem der Ansprüche 1-9, **dadurch gekennzeichnet, dass** innerhalb des von dem Kamerasystem erfassten Erfassungsbereiches (6) neben der Schutzzone (7) wenigstens eine Warnzone (8) definiert ist, wobei bei einem in der Warnzone (8) befindlichen sicherheitskritischen Objekt über einen Warnausgang (57) ein Warnmelder aktiviert wird.

11. Vorrichtung nach Anspruch 10, **dadurch gekennzeichnet, dass** der Warnmelder ein optisches und/oder akustisches Warnsignal abgibt.

12. Vorrichtung nach einem der Ansprüche 10 oder 11, **dadurch gekennzeichnet, dass** die Warnzone (8) an die Schutzzone (7) angrenzt.

13. Vorrichtung nach Anspruch 12, **dadurch gekennzeichnet, dass** für ein sicherheitskritisches Objekt innerhalb der Warnzone (8) dessen Bewegungsrichtung erfassbar ist.

14. Vorrichtung nach Anspruch 13, **dadurch gekennzeichnet, dass** eine Aktivierung des Warnmelders nur dann erfolgt, wenn sich ein sicherheitskritisches Objekt innerhalb der Warnzone (8) auf die Schutzzone (7) zu bewegt.

15. Vorrichtung nach einem der Ansprüche 10-14, **dadurch gekennzeichnet, dass** jeweils mehrere Schutzzonen (7) und Warnzonen (8) vorgesehen sind, wobei jeweils einer Schutzzone (7) ein Schaltausgang (56) und jeder Warnzone (8) ein Warnausgang (57) zugeordnet ist.

16. Vorrichtung nach Anspruch 15, **dadurch gekennzeichnet, dass** jeder Schaltausgang (56) und jeder Warnausgang (57) als selbstüberwachender Sicherheitsausgang ausgebildet ist.

17. Vorrichtung nach Anspruch 15 oder 16, **dadurch gekennzeichnet, dass** das Arbeitsmittel außer Betrieb gesetzt ist, falls sich in wenigstens einer Schutzzone (7) ein sicherheitskritisches Objekt befindet.

18. Vorrichtung nach einem der Ansprüche 10 - 17, **dadurch gekennzeichnet, dass** die Abmessungen der Schutzzonen (7) und Warnzonen (8) jeweils durch Eingabe von Parameterwerten dimensionierbar sind.

19. Vorrichtung nach einem der Ansprüche 10-17, **dadurch gekennzeichnet, dass** die Grenzen der Schutzzonen (7) und Warnzonen (8) jeweils in einem vom Kamerasystem erzeugten Aufnahmebild eingezeichnet werden.

20. Vorrichtung nach einem der Ansprüche 11-19, **dadurch gekennzeichnet, dass** die Abmessungen der Schutzzonen (7) und Warnzonen (8) jeweils durch einen Einlernvorgang vorgebbar sind.

21. Vorrichtung nach einem der Ansprüche 1 - 20, **dadurch gekennzeichnet, dass** innerhalb des Erfassungsbereiches (6) für vorgegebene Zeitintervalle Bereiche ausblendbar sind, so dass bei Eindringen sicherheitskritischer Objekte in diese Bereiche keine Außerbetriebsetzung des Arbeitsmittels über einen Schaltausgang (56) erfolgt.

22. Vorrichtung nach einem der Ansprüche 1-21, **dadurch gekennzeichnet, dass** dem Kamerasystem ein Beleuchtungssystem (50) zugeordnet ist.

23. Vorrichtung nach einem der Ansprüche 1 - 22, **dadurch gekennzeichnet, dass** das Arbeitsmittel von einem Arbeitsroboter, insbesondere einem Montageroboter (1) gebildet ist.

24. Vorrichtung nach einem der Ansprüche 1 - 22, **dadurch gekennzeichnet, dass** das Arbeitsmittel von einer Druckmaschine (9) gebildet ist.

25. Vorrichtung nach einem der Ansprüche 1 - 22, **dadurch gekennzeichnet, dass** das Arbeitsmittel von einer Zuführeinrichtung gebildet ist.

26. Vorrichtung nach einem der Ansprüche 1 - 22, **dadurch gekennzeichnet, dass** das Arbeitsmittel von einer Presse gebildet ist.

27. Vorrichtung nach einem der Ansprüche 1 - 22, **dadurch gekennzeichnet, dass** das Arbeitsmittel von einer Abkantpresse (17) gebildet ist.

28. Vorrichtung nach einem der Ansprüche 1 - 27, **dadurch gekennzeichnet, dass** die sicherheitskritischen Objekte von Personen gebildet sind.

29. Vorrichtung nach einem der Ansprüche 1 - 28, **dadurch gekennzeichnet, dass** die sicherheitskritischen Objekte von Armen von Personen gebildet sind.

## Claims

1. Device (5) for monitoring an action area (6) of an operating means, comprising at least one redundant camera system consisting of two cameras (51, 51') for detection of safety-critical objects within at least one protection zone (7), two computer units (53, 53'), wherein each computer unit (53 or 53') is connected with a respective one of the cameras (51 or 51') for evaluation of the image data detected there, and at least one switching output (56), which is controlled by the computer units (53, 53') and by way of which the operating means is placed in operation only if no safety-critical object is located within the protection zone (7), **characterised in that** the device consists of a beam divider (52), which is arranged upstream of the cameras and by of which images of the detection region (6) can be imaged on both cameras (51, 51'), and that the two computer units (53, 53') are coupled together for mutual checking.

2. Device according to claim 1, **characterised in that** the cameras (51, 51') of the camera system are identical or at least functionally equivalent.

3. Device according to one of claims 1 and 2, **characterised in that** the computer units (53, 53') have an identical hardware structure.

4. Device according to one of claims 1 to 3, **characterised in that** the computer units (53, 53') have different software structures.

5. Device according to claim 4, **characterised in that** different software modules are installed on the computer units (53, 53').

6. Device according to one of claims 1 to 5, **characterised in that** image features are obtained from the image data, which is read in from the associated cameras (51, 51'), in the computer units (53, 53') for the object detection.

7. Device according to claim 6, **characterised in that** a comparison of image features ascertained in the two computers (53, 53') is carried out by way of the coupling between the computer units (53, 53').

8. Device according to claim 7, **characterised in that** the operating means is taken out of operation by way of the switching output (56) if the image features ascertained in the individual computer units (53, 53') do not agree.

9. Device according to claim 8, **characterised in that** the operating means is taken out of operation by way of the switching output (56) if agreeing image features, which are associated with a safety-critical object located in the protection zone (7), are ascertained in both computer units (53, 53').

10. Device according to one of claims 1 to 9, **characterised in that** at least one warning zone (8) is defined within the detection region (6), which is detected by the camera system, near the protection zone (7), wherein a warning report device is activated by way of a warning output (57) in the case of a safety-critical object located in the warning zone (8).

11. Device according to claim 10, **characterised in that** the warning report device issues an optical and/or acoustic warning signal.

12. Device according to one of claims 10 and 11, **characterised in that** the warning zone (8) adjoins the protection zone (7).

13. Device according to claim 12, **characterised in that** for a safety-critical object within the warning zone (8) the movement direction of the object is detectable.

14. Device according to claim 13, **characterised in that** activation of the warning report device is carried out only if a safety-critical object within the warning zone (8) moves towards the protection zone (7).

15. Device according to one of claims 10 to 14, **characterised in that** several respective protection zones (7) and warning zones (8) are provided, wherein a switching output (56) is associated with each protection zone (7) and a warning output (57) is associated with each warning zone (8).

16. Device according to claim 15, **characterised in that** each switching output (56) and each warning output (57) are constructed as a self-monitoring safety output.

17. Device according to claim 15 or 16, **characterised in that** the operating means is taken out of operation if a safety-critical object is located in at least one protection zone (7).

18. Device according to one of claims 10 to 17, **characterised in that** the sizes of the protection zones (7) and warning zones (8) can be respectively dimensioned by input of parameter values.

19. Device according to one of claims 10 to 17, **characterised in that** the boundaries of the protection zones (7) and warning zones (8) are respectively recorded in a photographic image produced by the camera system.

20. Device according to one of claims 11 to 19, **characterised in that** the sizes of the protection zones (7) and warning zones (8) are respectively predeterminable by a learning process.

21. Device according to one of claims 1 to 20, **characterised in that** areas can be cut out within the detection region (6) for predetermined time periods so that in the case of penetration of safety-critical objects into these areas the operating means is not taken out of operation by way of a switching output (56).

22. Device according to one of claims 1 to 21, **characterised in that** a lighting system (50) is associated with the camera system.

23. Device according to one of claims 1 to 22, **characterised in that** the operating means is formed by a working robot, particularly an assembly robot (1).

24. Device according to one of claims 1 to 22, **characterised in that** the operating means is formed by a printing machine (9).

25. Device according to one of claims 1 to 22, **characterised in that** the operating means is formed by a feed device.

26. Device according to one of claims 1 to 2, **characterised in that** the operating means is formed by a press.

27. Device according to one of claims 1 to 2, **characterised in that** the operating means is formed by an edge-folding press (17).

28. Device according to one of claims 1 to 27, **characterised in that** the safety-critical objects are formed by persons.

29. Device according to one of claims 1 to 28, **characterised in that** the safety-critical objects are formed by arms of persons.

## Revendications

1. Dispositif (5) de surveillance d'une zone de couverture (6) d'un organe de travail, comprenant au moins un système de caméra redondant composé de deux caméras (51, 51') pour la détection d'objets critiques pour la sécurité à l'intérieur d'au moins une zone de protection (7) et comprenant deux unités de calcul (53, 53'), les unités de calcul (53 ou 53') étant chacune connectée à une caméra (51 ou 51') pour l'évaluation des informations d'images qui y sont détectées, et comprenant au moins une sortie de commutation (56) commandée par les unités de calcul (53, 53'), par laquelle l'organe de travail n'est mis en service que si aucun objet critique pour la sécurité ne se trouve à l'intérieur de la zone de protection (7), **caractérisé en ce que** le dispositif se compose d'un diviseur de faisceau (52) placé en amont des caméras, au moyen duquel des images de la zone de couverture (6) peuvent être représentées sur les deux caméras (51, 51') et que les deux unités de calcul (53, 53') sont couplées l'une à l'autre dans un but de vérification mutuelle.

2. Dispositif selon la revendication 1, **caractérisé en ce que** les caméras (51, 51') du système de caméras sont identiques ou au moins fonctionnent de la même façon.

3. Dispositif selon l'une des revendications 1 ou 2, **caractérisé en ce que** les unités de calcul (53, 53') présentent une structure matérielle identique.

4. Dispositif selon l'une des revendications 1 à 3, **caractérisé en ce que** les unités de calcul (53, 53') présentent des structures logicielles différentes.

5. Dispositif selon la revendication 4, **caractérisé en ce que** des modules logiciels différents sont installés sur les unités de calcul (53, 53').

6. Dispositif selon l'une des revendications 1 à 5, **caractérisé en ce que**, dans les unités de calcul (53, 53'), des caractéristiques d'images sont extraites des informations d'images lues par les caméras (51,51') associées, dans le but de détecter des objets.

7. Dispositif selon la revendication 6, **caractérisé en ce que**, par le couplage entre les unités de calcul (53, 53'), l'on effectue une comparaison des caractéristiques d'images déterminées dans les deux unités de calcul (53, 53').

8. Dispositif selon la revendication 7, **caractérisé en ce que** l'organe de travail est mis hors service par l'intermédiaire de la sortie de commutation (56) si les caractéristiques d'images déterminées dans les deux unités de calcul (53, 53') ne concordent pas.

9. Dispositif selon la revendication 8, **caractérisé en ce que** l'organe de travail est mis hors service par l'intermédiaire de la sortie de commutation (56) si l'on détermine dans les deux unités de calcul (53, 53') des caractéristiques d'images concordantes qui sont associées à un objet critique pour la sécurité se trouvant dans la zone de protection (7).

10. Dispositif selon l'une des revendications 1 à 9, **caractérisé en ce que**, à l'intérieur de la zone de couverture (6) couverte par le système de caméra, au moins une zone d'avertissement (8) est définie en plus de la zone de protection (7), un avertisseur étant activé par une sortie d'avertissement (57) si un objet critique pour la sécurité se trouve dans la zone d'avertissement (8).

11. Dispositif selon la revendication 10, **caractérisé en ce que** l'avertisseur émet un signal d'avertissement optique et/ou acoustique.

12. Dispositif selon l'une des revendications 10 ou 11, **caractérisé en ce que** la zone d'avertissement (8) est contiguë à la zone de protection (7).

13. Dispositif selon la revendication 12, **caractérisé en ce que** le sens de déplacement d'un objet critique pour la sécurité à l'intérieur de la zone d'avertissement (8) peut être détecté.

14. Dispositif selon la revendication 13, **caractérisé en ce que** l'avertisseur n'est activé que si un objet critique pour la sécurité se trouvant à l'intérieur de la zone d'avertissement (8) se déplace vers la zone de protection (7).

15. Dispositif selon l'une des revendications 10 à 14, **caractérisé en ce qu'**il est prévu plusieurs zones de protection (7) et plusieurs zones d'avertissement (8), une sortie de commutation (56) étant associée à chaque zone de protection (7) et une sortie d'avertissement (57) à chaque zone d'avertissement (8).

16. Dispositif selon la revendication 15, **caractérisé en ce que** chaque sortie de commutation (56) et chaque sortie d'avertissement (57) est conçue comme sortie de sécurité autosurveillée.

17. Dispositif selon la revendication 15 ou 16, **caractérisé en ce que** l'organe de travail est mis hors service si un objet critique pour la sécurité se trouve dans au moins une zone de protection (7).

18. Dispositif selon l'une des revendications 10 à 17, **caractérisé en ce que** les dimensions des zones de protection (7) et des zones d'avertissement (8) peuvent être dimensionnées dans chaque cas par entrée de valeurs de paramètres.

19. Dispositif selon l'une des revendications 10 à 17, **caractérisé en ce que** les limites des zones de protection (7) et des zones d'avertissement (8) sont dessinées dans chaque cas sur une image générée par le système de caméras.

20. Dispositif selon l'une des revendications 11 à 19, **caractérisé en ce que** les dimensions des zones de protection (7) et des zones d'avertissement (8) peuvent être définies dans chaque cas par un processus d'apprentissage.

21. Dispositif selon l'une des revendications 1 à 20, **caractérisé en ce que**, à l'intérieur de la zone de couverture (6), des zones peuvent être exclues pendant des intervalles de temps définis, de sorte qu'il n'y a pas de mise hors service de l'organe de travail par l'intermédiaire d'une sortie de commutation (56) si un objet critique pour la sécurité pénètre dans ces zones.

22. Dispositif selon l'une des revendications 1 à 21, **caractérisé en ce qu'**un système d'éclairage (50) est associé au système de caméras.

23. Dispositif selon l'une des revendications 1 à 22, **caractérisé en ce que** l'organe de travail est formé par un robot de travail, en particulier un robot de montage (1).

24. Dispositif selon l'une des revendications 1 à 22, **caractérisé en ce que** l'organe de travail est formé par une machine à imprimer (9).

25. Dispositif selon l'une des revendications 1 à 22, **caractérisé en ce que** l'organe de travail est formé par un dispositif d'amenée.

26. Dispositif selon l'une des revendications 1 à 22, **caractérisé en ce que** l'organe de travail est formé par une presse.

27. Dispositif selon l'une des revendications 1 à 22, **caractérisé en ce que** l'organe de travail est formé par une presse plieuse (17).

28. Dispositif selon l'une des revendications 1 à 27, **caractérisé en ce que** les objets critiques pour la sécurité sont formés par des personnes.

29. Dispositif selon l'une des revendications 1 à 28, **caractérisé en ce que** les objets critiques pour la sécurité sont formés par des bras de personnes.
